(19) Europäisches Patentamt
European Patent Office
Office européen des brevets

(11) EP 0 717 077 B1

# (12) EUROPÄISCHE PATENTSCHRIFT

(45) Veröffentlichungstag und Bekanntmachung des Hinweises auf die Patenterteilung:
**09.02.2000 Patentblatt 2000/06**

(51) Int Cl.[7]: **C08L 55/02**, C08F 279/04

(21) Anmeldenummer: **95117835.9**

(22) Anmeldetag: **13.11.1995**

## (54) ABS-Formmassen mit neuartiger Morphologie

ABS moulding composition with new morphology

Masses à mouler d'ABS de morphologie nouvelle

(84) Benannte Vertragsstaaten:
**DE ES FR GB IT NL**

(30) Priorität: **24.11.1994 DE 4441846**

(43) Veröffentlichungstag der Anmeldung:
**19.06.1996 Patentblatt 1996/25**

(73) Patentinhaber: **BAYER AG**
**51368 Leverkusen (DE)**

(72) Erfinder:
- **Eichenauer, Herbert, Dr.**
  **D-41539 Dormagen (DE)**
- **Schmidt, Adolf, Dr.**
  **D-51061 Köln (DE)**
- **Leitz, Edgar, Dr.**
  **D-41541 Dormagen (DE)**
- **Piejko, Karl-Erwin, Dr.**
  **D-51467 Bergisch Gladbach (DE)**

(56) Entgegenhaltungen:
**EP-A- 0 116 330** **DE-A- 2 038 738**
**DE-B- 1 247 665** **US-A- 4 292 233**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 717 077 B1

Printed by Jouve, 75001 PARIS (FR)

## Beschreibung

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

ABS-Produkte mit hoher Zähigkeit lassen sich unter Verwendung von Emulsions-ABS nur bei Einsatz hoher Kautschukmengen herstellen; damit sind jedoch Nachteile bei anderen Eigenschaften, insbesondere Härte, Wärmeformbeständigkeit und thermoplastische Fließfähigkeit, verbunden.

Ziel ist es daher, ABS-Formmassen mit vorgegebener hoher Zähigkeit (Anforderungsprofil) und möglichst geringem Kautschukgehalt ohne die oben beschriebenen Nachteile bereitzustellen.

In bestimmten Grenzen lassen sich ABS-Formmassen mit guten Zähigkeiten und relativ niedrigen Kautschukgehalten durch Einsatz von sogenanntem Lösungs- oder Masse-ABS gewinnen; allerdings sind solche Produkte nicht für alle Anwendungsbereiche (z.B. nicht für Formteile mit Hochglanzanforderungen wie Gehäuse oder Telefonteile) geeignet.

Es wurde gefunden, daß durch Emulsionspolymerisation hergestellte ABS-Polymerisate mit hoher Zähigkeit bei relativ niedrigen Kautschukgehalten (vergleichbar denen von Masse-ABS) erhalten werden, wenn die Kautschukphase eine spezielle gezackte Struktur aufweist.

Gegenstand der Erfindung sind Formmassen vom ABS-Typ aus mindestens einer Harzmatrix und einem darin verteilten durch Emulsionspolymerisation hergestellten teilchenförmigen Pfropfkautschukpolymeren, dadurch gekennzeichnet, daß mindestens 70 % der Pfropfkautschukteilchen (Anzahl), vorzugsweise mindestens 80 % der Pfropfkautschukteilchen (Anzahl) und besonders bevorzugt mindestens 90 % der Pfropfkautschukteilchen (Anzahl) eine solche über transmissionselektronenmikroskopische Aufnahmen detektierbare Struktur der Kautschukphase aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30, vorzugsweise 7 bis 25 und besonders bevorzugt 10 bis 20 solcher Zacken vorhanden sind, die sich von einem idealisierten runden Teilchen (mit einem Durchmesser d) durch einen Durchmesser d + d/x mit x = 3 bis 15, vorzugsweise 4 bis 12 und besonders bevorzugt 5 bis 10, unterscheiden.

Eine bevorzugte Ausführungsform der erfindungsgemäßen Formmassen vom ABS-Typ ist dadurch gekennzeichnet, daß sie bei einem Gesamtkautschukgehalt von 12 bis 18 Gew.-% und einem gewichtsmittleren Molekulargewicht ($\overline{M}_w$) der Harzmatrix von $\overline{M}_w$ = 75 000 bis $\overline{M}_w$ = 125 000 eine Kerbschlagzähigkeit bei Raumtemperatur (nach ISO 180/1A) von mindestens 30 kJ/m$^2$, vorzugsweise mindestens 33 kJ/m$^2$ und besonders bevorzugt mindestens 35 kJ/m$^2$, eine Härte (nach DIN 53 456) von mindestens 90 N/mm$^2$, vorzugsweise mindestens 94 N/mm$^2$ und besonders bevorzugt mindestens 96 N/mm$^2$ und einen Oberflächenglanz (nach DIN 67 530, Reflektometerwert) von mindestens 80, vorzugsweise mindestens 83 und besonders bevorzugt mindestens 85, aufweisen.

Ein weiterer Gegenstand der vorliegenden Erfindung ist ein Verfahren zur Herstellung von Pfropfkautschukteilchen mit einer oben beschriebenen Struktur durch Pfropfpolymerisation von harzbildenden Monomeren in Gegenwart mindestens eines in Emulsionsform vorliegenden Kautschuks mit einem Quellungsindex ≥ 30, vorzugsweise ≥ 40 und besonders bevorzugt ≥ 50 (in Toluol) derart, daß während 25 bis 90 %, vorzugsweise 30 bis 80 % und besonders bevorzugt 35 bis 75 %, der Gesamtreaktionszeit im Reaktionsgemisch eine Menge von 5 bis 70 Gew.-%, vorzugsweise 7,5 bis 60 Gew.-% und besonders bevorzugt 10 bis 50 Gew.-% (bezogen auf gesamtes bis zum jeweiligen Zeitpunkt eingesetztes Monomer), an nicht umgesetztem Monomer vorhanden ist.

Die erfindungsgemäß eingesetzten Kautschuke müssen eine Glastemperatur unterhalb von 0°C besitzen. Geeignet sind z.B:

- Dienkautschuke, das heißt, Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-%, eines Vinylmonomeren, z.B. Acrylnitril, Methacrylnitril, Styrol, α-Methylstyrol, Halogenstyrole, $C_1$-$C_4$-Alkylstyrole, $C_1$-$C_6$-Alkylacrylate und -methacrylate, Alkylenglykoldi-acrylate und -methacrylate sowie Divinylbenzol;

- Acrylatkautschuke, das heißt, Homo- und Copolymerisate von $C_1$-$C_{10}$-Alkylacrylaten, z.B. Homopolymerisate von Ethylacrylat, Butylacrylat, 2-Ethylhexylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure (ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid- (oder -methacrylamid)-Derivate enthalten, die als Vernetzer wirken, z.B. Divinylbenzol, Triallylcyanurat und wobei der Kautschuk C=C-Doppelbindungen enthält;

- Terpolymer-Kautschuke, das heißt, Copolymerisate aus mono-olefinischen Kohlenwasserstoffen, z.B. Ethylen,

Propylen und Diene, z.B. Butadien, Cyclopentadien.

Bevorzugt sind Polybutadienkautschuke und SBR-Kautschuke mit bis zu 30 Gew.-% einpolymerisiertem Styrol, besonders bevorzugt ist Polybutadien.

Die erfindungsgemäß einzusetzenden Kautschukpolymerisate weisen Quellungsindices (in Toluol) ≥ 30, vorzugsweise ≥ 40 und besonders bevorzugt ≥ 50, auf. Dabei erfolgt die Ermittlung der Quellungsindices folgendermaßen: 1 g trockener stabilisierter kleingeschnittener Kautschuk wird mit 100 $cm^3$ Toluol versetzt und 24 h in einer braunen Flasche geschüttelt. Dann wird über einen doppelten Stoffilter abgesaugt bis das Filtrat keinen Niederschlag mehr aufweist. Nach dem Waschen mit weiterem Toluol wird der Niederschlag feucht gewogen. Danach wird bei 70°C im Trockenschrank bis zur Gewichtskonstanz getrocknet und erneut gewogen. Der Quellungsindex (QI) ergibt sich aus dem Verhältnis

$$QI = \frac{\text{Niederschlag (feucht)}}{\text{Niederschlag (trocken)}} .$$

Die Herstellung von Kautschuken mit solchen Quellungsindices ist prinzipiell bekannt, die geforderten Werte werden durch Anwendung geeigneter Reaktionsbedingungen (z.B. niedrige Reaktionstemperatur oder Zusatz von Molekulargewichtsreglern wie z.B. Mercaptane) eingestellt.

Die Größe der erfindungsgemäß einzusetzenden Kautschukteilchen kann in weiten Grenzen variiert werden, z.B. sind prinzipiell mittlere Teilchendurchmesser von ca. 50 nm bis ca. 500 nm möglich; bevorzugt sind Kautschukteilchen mit mittleren Durchmessern von ca. 200 nm bis ca. 400 nm, besonders bevorzugt von ca. 250 nm bis ca. 350 nm. Hierbei bedeuten mittlere Teilchendurchmesser $d_{50}$-Werte, die durch Ultrazentrifugenmessung (vgl. W. Scholtan und H. Lange in Kolloid-Z. und Z. Polymere <u>250,</u> S. 782-796 (1972) bestimmt wurden.

Die Herstellung der erfindungsgemäßen Pfropfkautschukteilchen erfolgt durch Polymerisation von harzbildenden Monomeren in Gegenwart des in Latexform vorliegenden Kautschuks.

Dabei muß die Pfropfpolymerisation so geführt werden, daß während 25 bis 90 %, vorzugsweise 30 bis 80 % und besonders bevorzugt 35 bis 75 % der Gesamtreaktionszeit im Reaktionsgemisch eine Menge von 5 bis 70 Gew.-%, vorzugsweise 7,5 bis 60 Gew.-% und besonders bevorzugt 10 bis 50 Gew.-% (bezogen auf gesamtes bis zum jeweiligen Zeitpunkt eingesetztes Monomer), an nicht umgesetztem Monomer vorhanden ist.

Bei der Pfropfkautschukherstellung eingesetzte harzbildende Monomere sind vorzugsweise Verbindungen mit einer Vinylgruppe, z.B. Styrol, $C_1$-$C_4$-alkylsubstituierte Styrole, $\alpha$-Methylstyrol, Acrylnitril, Methacrylnitril, Ester der Acrylsäure und/oder der Methacrylsäure mit $C_1$-$C_8$-aliphatischen oder cycloaliphatischen Alkoholen, N-substituiertes Maleinimid oder Mischungen daraus. Besonders bevorzugt sind Mischungen aus Styrol und Acrylnitril, vorzugsweise im Gewichtsverhältnis 60:40 bis 80:20, wobei Styrol und/oder Acrylnitril teilweise durch copolymerisierbare Monomere, vorzugsweise durch $\alpha$-Methylstyrol, Methylmethacrylat oder N-Phenylmaleinimid, ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge bei der Pfropfpolymerisationsreaktion).

Geeignete Molekulargewichtsregler sind beispielsweise n-Dodecylmercaptan, t-Dodecylmercaptan, dimeres $\alpha$-Methylstyrol.

Als Initiatoren kommen praktisch alle als Radikalbildner fungierende Substanzen in Betracht. Beispiele hierfür sind anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium- oder Kaliumpersulfat, Kaliumperphosphat, Natriumperborat sowie Redox-Systeme, die sich aus einem in der Regel organischen Oxidationsmittel und einem Reduktionsmittel zusammensetzen, wobei vorzugsweise im Reaktionsmedium zusätzlich Schwermetallionen vorhanden sind (siehe H. Logemann in Houben-Weyl, Methoden der Organischen Chemie, Band 14/1, S. 263 bis 297).

Bevorzugte Initiatoren sind Ammonium-, Natrium- und Kaliumpersulfat, besonders bevorzugt ist Kaliumpersulfat.

Die Reaktionstemperatur bei der Pfropfkautschukherstellung ist 30° bis 150°C, vorzugsweise 40° bis 90°C.

Als Emulgatoren können die üblichen anionischen Emulgatoren wie Alkylsulfate, Alkylsulfonate, Aralkylsulfonate, Seifen alkalischer disproportionierter oder hydrierter Abietin- oder Tallölsäuren, Seifen gesättigter oder ungesättigter Fettsäuren, Emulgatoren auf Basis von Verbindungen mit cyclischen Kohlenwasserstoffgerüsten gemäß DE-OS 3 919 548 und DE-OS 3 925 634 verwendet werden, vorzugsweise werden Emulgatoren mit Carboxylgruppen (z. B. Salze von $C_{10}$-$C_{18}$-Fettsäuren, Salze der disproportionierten Abietinsäure) eingesetzt.

Zur Erzeugung der Pfropfkautschukteilchen mit der erfindungsgemäßen Struktur werden 40 bis 90 Gew.-Teile, vorzugsweise 45 bis 85 Gew.-Teile und besonders bevorzugt 50 bis 80 Gew.-Teile, eines harzbildenden Monomeren, vorzugsweise eines Gemisches aus Styrol und Acrylnitril, das gegebenenfalls bis zu 50 Gew.-% (bezogen auf

die Gesamtmenge der in der Pfropfpolymerisation eingesetzten Monomeren) eines oder mehrerer Comonomerer enthalten kann, in Gegenwart von 10 bis 60 Gew.-Teilen, vorzugsweise 15 bis 55 Gew.-Teilen und besonders bevorzugt 20 bis 50 Gew.-Teilen (jeweils bezogen auf Feststoff), eines Kautschuklatex, vorzugsweise eines Polybutadienlatex, unter Einhaltung der oben beschriebenen Bedingungen polymerisiert.

Beim Einsatz von Mischungen aus Styrol und Acrylnitril als harzbildende Monomere werden diese vorzugsweise im Gewichtsverhältnis 90:10 bis 50:50, besonders bevorzugt im Gewichtsverhältnis 65:35 bis 75:25 eingesetzt, wobei Styrol und/oder Acrylnitril teilweise durch copolymerisierbare Monomere, vorzugsweise durch α-Methylstyrol, Methylmethacrylat oder N-Phenylmaleinimid ersetzt werden können.

Die Struktur der Pfropfkautschukteilchen kann durch transmissionselektronenmikroskopische Verfahren (z. B. nach Kontrastierung mit Osmiumtetroxid, vgl. z.B. J.A. Manson, L.H. Sperling: Polymer Blends and Composites (Plenum Press, New York/London, 1976), S. 57-58 und dort zitierte Literatur) detektiert werden. Dabei muß die Kautschukphase der Pfropfkautschukteilchen in den elektronenmikroskopischen Aufnahmen (das heißt, in der Abbildung der Schnittfläche) ungleichmäßige zellenförmige Einschlüsse des harzbildenden Polymeren enthalten und eine unregelmäßig gezackte Struktur an der Teilchenoberfläche zeigen. Es müssen pro Teilchen 5 bis 30, vorzugsweise 7 bis 25 und besonders bevorzugt 10 bis 20 Zacken vorhanden sein, die sich von einem idealisierten runden Teilchen (mit einem Teilchendurchmesser d) durch einen Durchmesser d+d/x mit x = 3 bis 15, vorzugsweise 4 bis 12 und besonders bevorzugt 5 bis 10, unterscheiden.

Schematisch:

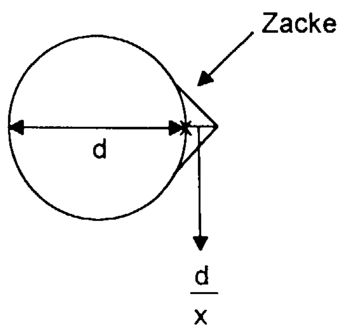


Die erfindungsgemäßen Pfropfkautschukpolymerisate können prinzipiell so hergestellt werden, daß das Matrixharz während der Pfropfpolymerisation in Form von nicht aufgepfropftem Polymer gebildet wird, vorzugsweise werden die erfindungsgemäßen Pfropfkautschukpolymerisate jedoch mit mindestens einem thermoplastischen kautschukfreien Vinylharz abgemischt.

Dies ist auf verschiedene Weise möglich. Wurde das Vinylharz selbst durch Emulsionspolymerisation erzeugt, so können die Latices gemischt und gemeinsam ausgefällt und aufgearbeitet werden.

Wurde das Vinylharz durch Lösungs- oder Massepolymerisation hergestellt, so muß das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem Vinylharz vermischt werden (vorzugsweise auf Mehrwalzenstühlen, Mischextrudern oder Innenknetern); diese Methode wird bevorzugt angewandt.

Als Vinylharze werden vorzugsweise Copolymerisate des Styrols und Acrylnitrils im Gewichtsverhältns 90:10 bis 50:50 eingesetzt, wobei das Styrol ganz oder teilweise durch α-Methylstyrol und/oder Methylmethacrylat ersetzt sein kann; gegebenenfalls kann anteilmäßig bis zu 30 Gew.-%, bezogen auf Vinylharz, eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Prizipiell können neben einem oder mehreren thermoplastischen Vinylharzen auch weitere Thermoplastharze in den erfindungsgemäßen Formmassen enthalten sein.

Beispiele für solche Thermoplastharze sind aromatische Polycarbonate, aromatische Polyestercarbonate, Polyester, Polyamide.

Geeignete thermoplastische Polycarbonate bzw. Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II)

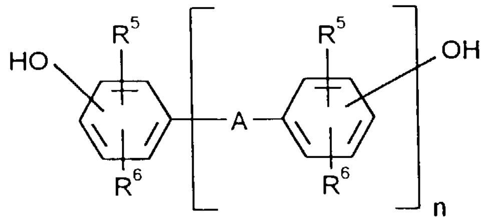

(I)

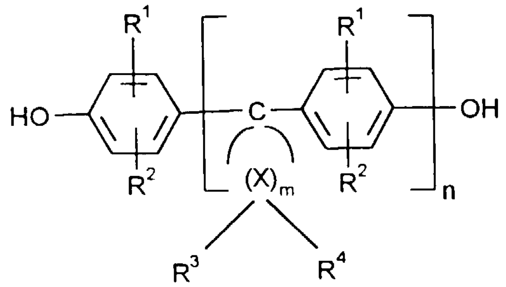

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, $SO_2$- oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

x Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren oder mit Phosgen nach dem Verfahren in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-tri methyl cyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, das heißt, Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(6-hydroxyethoxy)-benzol, 2,2,-Bis-4-hydroxycyclohexyl)-propan, 2,4-Dihydroxy-1,1,3,3-tetramethylcyclobutan, 2,2-Bis-(3-6-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Der Anteil des Pfropfkautschuks in den erfindungsgemäßen Formmassen läßt sich in weiten Grenzen variieren; vorzugsweise beträgt er 20 bis 90 Gew.-%, besonders bevorzugt 30 bis 85 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gewichtsprozente, wenn nicht anders angegeben.

## Beispiele

### Pfropfkautschuke

**Pfropfkautschuk A** (erfindungsgemäß)

40 Gew.-Teile (gerechnet als Feststoff) eines durch radikalische Polymerisation hergestellten anionisch emulgierten Polybutadienlatex mit einem $d_{50}$-Wert von 284 nm und einem Quellungsindex von 59 werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird.

Danach werden 60 Gew.-Teile eines Gemisches aus 72 Gew.-% Styrol und 28 Gew.-% Acrylnitril und 0,1 Gew.-Teile tert.-Dodecylmercaptan innerhalb von 4 h so zudosiert, daß im Verlauf der Polymerisationsreaktion folgende Gehalte an nicht umgesetzten Monomer im Reaktionsgemisch resultierten (ermittelt durch Probenahme, Zusatz von Phenothiazin, Koagulation des Polymeranteils und Berechnung der unumgesetzten Monomermenge):

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 20 | 8,4 |
| 40 | 14,2 |
| 60 | 19,2 |
| 80 | 20,1 |

(fortgesetzt)

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 100 | 18,3 |
| 120 | 16,1 |
| 140 | 13,6 |
| 160 | 11,0 |
| 180 | 7,4 |
| 200 | 2,1 |
| 220 | 1,1 |
| 240 | 2,0 |
| 260 | 0,8 |
| 280 | 0,7 |
| 300 | 0,5 |

Parallel zu den Monomeren wird innerhalb von 4 h 1 Gew.-Teil (gerechnet als Festsubstanz) des Natriumsalzes eines Harzsäuregemisches (Dresinate 731, gelöst in alkalisch eingestelltem Wasser) als Emulgator zudosiert. Nach einer 1-stündigen Nachreaktionszeit wird der Pfropfkautschuk nach Zugabe von ca. 1,0 Gew.-Teilen eines phenolischen Antioxidans mit einer Mischung aus wäßriger Magnesiumsulfat-Lösung und Essigsäure koaguliert; nach dem Waschen mit Wasser wird das resultierende Pulver bei 70°C im Vakuum getrocknet.

**Pfropfkautschuk B** (erfindungsgemäß)

35 Gew.-Teile (gerechnet als Feststoff) eines durch radikalische Polymerisation hergestellten anionisch emulgierten Polybutadienlatex mit einem $d_{50}$-Wert von 306 nm und einem Quellungsindex von 53 werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird.

Danach werden 65 Gew.-Teile eines Gemisches aus 73 Gew.-% Styrol und 27 Gew.-% Acrylnitril und 0,15 Gew.-Teile tert.-Dodecylmercaptan innerhalb von 4 h so zudosiert, daß im Verlauf der Polymerisationsreaktion folgende Gehalte an nicht umgesetztem Monomer im Reaktionsgemisch resultierten:

| Zeitpunkt der Probenahme (min nach Reaktionsbeginn | Anteil an nicht umgesetztem Monomer im Reaktionsgemisch (Gew.-% bezogen auf jeweils zudosierte Monomermenge) |
|---|---|
| 20 | 10,5 |
| 40 | 15,2 |
| 60 | 22,7 |
| 80 | 21,9 |
| 100 | 20,4 |
| 120 | 18,1 |
| 140 | 14,8 |
| 160 | 12,1 |
| 180 | 9,0 |
| 200 | 6,2 |
| 220 | 3,6 |

(fortgesetzt)

| Zeitpunkt der Probenahme (min nach Reaktionsbeginn | Anteil an nicht umgesetztem Monomer im Reaktionsgemisch (Gew.-% bezogen auf jeweils zudosierte Monomermenge) |
|---|---|
| 240 | 2,4 |
| 260 | 1,9 |
| 280 | 1,0 |
| 300 | 0,6 |

Parallel zu den Monomeren wird innerhalb von 4 h 1 Gew.-Teil (gerechnet als Festsubstanz) des Natriumsalzes eines Harzsäuregemisches (Dresinate 731, gelöst in alkalisch eingestelltem Wasser) als Emulgator zudosiert. Nach einer 1-stündigen Nachreaktionszeit wird der Pfropfkautschuk wie unter A beschrieben aufgearbeitet.

**Pfropfkautschuk C** (nicht erfindungsgemäß)

Die unter "Pfropfkautschuk A" beschriebene Reaktion wurde wiederholt, wobei ein Polybutadienlatex mit einem $d_{50}$-Wert von 285 nm und einem Quellungsindex von 20 zum Einsatz kam.

**Pfropfkautschuk D** (nicht erfindungsgemäß)

Die unter "Pfropfkautschuk A" beschriebene Reaktion wurde wiederholt, wobei die Monomeren so zudosiert wurden, daß im Verlauf der Polymerisationsreaktion folgende Gehalte an nicht umgesetztem Monomer im Reaktionsgemisch resultierten:

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 20 | 4,1 |
| 40 | 5,2 |
| 60 | 4,3 |
| 80 | 3,9 |
| 100 | 4,6 |
| 120 | 4,5 |
| 140 | 4,5 |
| 160 | 4,1 |
| 180 | 4,0 |
| 200 | 4,9 |
| 220 | 5,1 |
| 240 | 4,7 |
| 260 | 3,1 |
| 280 | 2,0 |
| 300 | 0,6 |

**ABS-Formmassen**

Die oben beschriebenen Pfropfkautschuke wurden mit einem Styrol/Acrylnitril-Copolymerharz (Gew.-Verhältnis Styrol:Acrylnitril = 72:28, $\overline{M}_w$ = 115 000, $\overline{M}_w/\overline{M}_n$-1≤2) in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung durch Spritzgießen zu Prüfstäben und zu einer ebenen Platte (zur Beurteilung der Oberfläche) verarbeitet.

Folgende Daten wurden ermittelt:

Kerbschlagzähigkeit bei Raumtemperatur ($a_k^{RT}$) und bei -40°C ($a_k^{-40°C}$) nach ISO 180/1A (Einheit: kJ/$m^2$), Kugeldruckhärte $H_c$ nach DIN 53 456 (Einheit: N/$mm^2$), Wärmeformbeständigkeit (Vicat B) nach DIN 53 460 (Einheit: °C), Fließverhalten MVI nach DIN 53 735U (Einheit: $cm^3$/10 min) und Glanzverhalten nach DIN 67 530 bei einem Reflektionswinkel von 60° (Reflektometerwert).

Die Mischungsverhältnisse und die Ergebnisse sind in Tabelle 1 zusammengestellt.

Von den Formmassen mit einem Kautschukgehalt von 14 Gew.-% (Beispiele 1, 3, 5, 7 und zum Vergleich vom Masse-ABS 9) wurden elektronenmikroskopische Aufnahmen angefertigt (Kontrastierung mit Osmiumtetroxid) (Abbildungen 1 bis 5).

Daraus ist ersichtlich, daß die erfindungsgemäßen Formmassen mit der speziellen gezackten Struktur der Kautschukphase der Pfropfkautschukteilchen schon bei relativ niedrigen Kautschukgehalten, d.h. bei Kautschukgehalten wie sie durch Massepolymerisation hergestellte ABS-Polymerisate üblicherweise aufweisen, hervorragende mechanische Eigenschaften besitzen.

**Tabelle 1:** **Zusammensetzungen und Prüfdaten der untersuchten Formmassen**

| Beispiel | Eingesetzter Pfropfkauschuk | Pfropfkautschukmenge [Gew.-Tle] | Styrol/Acrylnitril-Copolymer [Gew.-Tle] | Kautschukgehalt [Gew.-%] | $a_k^{RT}$ [kJ/m$^2$] | $a_k^{-40°C}$ [kJ/m$^2$] | $H_c$ [N/mm$^2$] | Vicat B [°C] | MVI [cm$^3$/10 min] | Glanzgrad |
|---|---|---|---|---|---|---|---|---|---|---|
| 1 | A | 35 | 65 | 14 | 35 | 17 | 101 | 102 | 9,5 | 86 |
| 2 | A | 55 | 45 | 22 | 44 | 25 | 83 | 100 | 4,4 | 83 |
| 3 | B | 40 | 60 | 14 | 37 | 19 | 99 | 103 | 7,9 | 92 |
| 4 | B | 62,9 | 37,1 | 22 | 45 | 28 | 78 | 97 | 6,3 | 78 |
| 5 (Vergl.) | C | 35 | 65 | 14 | 18 | 11 | 105 | 99 | 8,1 | 85 |
| 6 (Vergl.) | C | 55 | 45 | 22 | 26 | 19 | 91 | 98 | 7,1 | 81 |
| 7 (Vergl.) | D | 35 | 65 | 14 | 23 | 13 | 100 | 101 | 8,1 | 81 |
| 8 (Vergl.) | D | 55 | 45 | 22 | 31 | 20 | 84 | 96 | 4,8 | 78 |
| 9 (Masse-ABS Dow Magnum 3904 (Vergleich) | | | | 14 | 33 | 14 | 83 | 97 | 5,0 | 56 |

## Patentansprüche

1. Formmassen vom ABS-Typ aus mindestens einer Harzmatrix und einem darin verteilten durch Emulsionspolymerisation hergestellten teilchenförmigen Pfropfkautschukpolymeren, dadurch gekennzeichnet, daß mindestens 70 % der Pfropfkautschukteilchen (Anzahl) mit einer Glastemperatur unterhalb von 0°C und einem Quellungsindex > 30 (in Toluol) eine solche über transmissionselektronenmikroskopische Aufnahmen detektierbare Struktur der Kautschukphase aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30 solcher Zacken vorhanden sind, die sich von einem idealisierten runden Teilchen (mit einem Durchmesser d) durch einem Durchmesser d + d/x mit x = 3 bis 15 unterscheiden.

2. Formmassen gemäß Anspruch 1, dadurch gekennzeichnet, daß mindestens 80 % der Pfropfkautschukteilchen (Anzahl) eine solche über transmissionselektronenmikroskopische Aufnahmen detektierbare Struktur der Kautschukphase aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 7 bis 25 solcher Zacken vorhanden sind, die sich von einem idealisierten runden Teilchen (mit einem Durchmesser d) durch einen Durchmesser d + d/x mit x = 4 bis 12 unterscheiden.

3. Formmassen gemäß Ansprüchen 1 und 2, dadurch gekennzeichnet, daß die Pfropfkautschukteilchen aus Polybutadien und aufgepfropftem Copolymer aus Styrol und Acrylnitril bestehen.

4. Formmassen gemäß Ansprüchen 1 bis 3, dadurch gekennzeichnet, daß die Harzmatrix aus mindestens zwei Monomerkomponenten, ausgewählt aus Styrol, α-Methylstyrol, Acrylnitril, Methylmethacrylat, N-Phenylmaleinimid aufgebaut ist.

5. Formmassen gemäß Anspruch 4 enthaltend mindestens eine zusätzliche Thermoplastharzkomponente ausgewählt aus aromatischem Polycarbonat, aromatischen Polyestercarbonat, Polyester, Polyamid.

6. Verfahren zur Herstellung von Pfropfkautschuken mit einer in Ansprüchen 1 und 2 beschriebenen Struktur durch Pfropfpolymerisation von harzbildenden Monomeren in Gegenwart mindestens eines in Emulsionsform vorliegenden Kautschuks mit einem Quellungsindex ≥30 (in Toluol) derart, daß während 25 bis 90 % der Gesamtreaktionszeit im Reaktionsgemisch eine Menge von 5 bis 70 Gew.-% (bezogen auf gesamtes bis zum jeweiligen Zeitpunkt eingesetztes Monomer) an nicht umgesetztem Monomer vorhanden ist.

7. Verfahren zur Herstellung von Pfropfkautschuken mit einer in Ansprüchen 1 und 2 beschriebenen Struktur durch Pfropfpolymerisation von harzbildenden Monomeren in Gegenwart mindestens eines in Emulsionsform vorliegenden Kautschuks mit einem Quellungsindex ≥40 (in Toluol) derart, daß während 30 bis 80 % der Gesamtreaktionszeit im Reaktionsgemisch eine Menge von 7,5 bis 60 Gew.-% (bezogen auf gesamtes bis zum jeweiligen Zeitpunkt eingesetztes Monomer) an nicht umgesetztem Monomer vorhanden ist.

8. Verfahren zur Herstellung von Pfropfkautschuken gemäß Ansprüchen 6 und 7, dadurch gekennzeichnet, daß als in Emulsionsform vorliegender Kautschuk Polybutadien und als Monomere Mischungen aus Styrol und Acrylnitril eingesetzt werden.

9. Verwendung der thermoplastischen Formmassen gemäß Ansprüchen 1 bis 5 zur Herstellung von Formteilen.

## Claims

1. Moulding compositions of the ABS type consisting of at least one resin matrix and a particulate graft-rubber polymer distributed therein and produced by emulsion polymerisation, characterised in that at least 70 % of the graft-rubber particles (number) with a glass temperature below 0°C and a swelling index > 30 (in toluene) exhibit a structure of the rubber phase which can be detected by photographs taken with the aid of a transmission electron microscope and in which the individual particles contain irregular cellular inclusions of resin-forming polymer and the surface of the particles exhibits an irregularly jagged structure such that, for each particle illustrated, 5 to 30 such jagged projections are present which differ from an idealised round particle (with a diameter d) by virtue of a diameter d + d/x with x = 3 to 15.

2. Moulding compositions according to claim 1, characterised in that at least 80 % of the graft-rubber particles (number) exhibit a structure of the rubber phase which can be detected by photographs taken with the aid of a transmission electron microscope and in which the individual particles contain irregular cellular inclusions of resin-forming polymer and the surface of the particles exhibits an irregularly jagged structure such that, for each particle illustrated, 7 to 25 such jagged projections are present which differ from an idealised round particle (with a diameter d) by virtue of a diameter d + d/x with x = 4 to 12.

3. Moulding compositions according to claims 1 and 2, characterised in that the graft-rubber particles consist of polybutadiene and grafted-on copolymer of styrene and acrylonitrile.

4. Moulding compositions according to claims 1 to 3, characterised in that the resin matrix is constructed from at least two monomer components selected from styrene, α-methylstyrene, acrylonitrile, methyl methacrylate, N-phenylmaleimide.

5. Moulding compositions according to claim 4, containing at least one additional thermoplastic resin component selected from aromatic polycarbonate, aromatic polyester carbonate, polyester, polyamide.

6. Process for the production of graft rubbers with a structure described in claims 1 and 2 by graft polymerisation of resin-forming monomers in the presence of at least one rubber that is available in emulsion form with a swelling index ≥ 30 (in toluene) in such a way that during 25 to 90 % of the overall reaction time in the reaction mixture a quantity of 5 to 70 wt-% (relative to the total monomer employed up until the time in question) of non-reacted monomer is present.

7. Process for the production of graft rubbers with a structure described in claims 1 and 2 by graft polymerisation of resin-forming monomers in the presence of at least one rubber that is available in emulsion form with a swelling index ≥ 40 (in toluene) in such a way that during 30 to 80 % of the overall reaction time in the reaction mixture a quantity of 7.5 to 60 wt-% (relative to the total monomer employed up until the time in question) of non-reacted monomer is present.

8. Process for the production of graft rubbers according to claims 6 and 7, characterised in that use is made of polybutadiene by way of rubber that is available in emulsion form and use is made of mixtures of styrene and acrylonitrile by way of monomers.

9. Use of the thermoplastic moulding compositions according to claims 1 to 5 for the production of moulded parts.

## Revendications

1. Matières à mouler du type ABS consistant en au moins une gangue résineuse dans laquelle est réparti un caoutchouc greffé polymère à l'état de particules, préparé par polymérisation en émulsion, caractérisées en ce que au moins 70 % des particules de caoutchouc greffé (en nombre) ayant une température de transition du second ordre inférieure à 0°C et un indice de gonflement supérieur à 30 (dans le toluène) ont une structure de la phase caoutchouc, visible sur des photographies prises au microscope électronique par transmission, dans laquelle les particules individuelles contiennent des inclusions cellulaires irrégulières de polymère formant des résines et la surface des particules a une structure dentelée irrégulière comportant 5 à 30 dentelures par particule, et faisant que les particules diffèrent d'une particule ronde idéale (au diamètre d) par un diamètre d + d/x avec x = 3 à 15.

2. Matières à mouler selon la revendication 1, caractérisées en ce qu'au moins 80 % des particules de caoutchouc greffé (en nombre) ont une structure de la phase caoutchouc, visible sur des photographies prises au microscope électronique par transmission, dans laquelle les particules individuelles contiennent des inclusions cellulaires irrégulières de polymère formant des résines et la surface des particules a une structure dentelée irrégulière comportant 7 à 25 dentelures par particule, et faisant que les particules diffèrent d'une particule ronde idéale (au diamètre d) par un diamètre d + d/x avec x = 4 à 12.

3. Matières à mouler selon les revendications 1 et 2, caractérisées en ce que les particules de caoutchouc greffé consistent en polybutadiène et copolymère greffé de styrène et d'acrylonitrile.

4. Matières à mouler selon les revendications 1 à 3, caractérisées en ce que la gangue résineuse consiste en au

moins deux composants monomères choisis parmi le styrène, l'α-méthylstyrène, l'acrylonitrile, le méthacrylate de méthyle, le N-phénylmaléimide.

**5.** Matières à mouler selon la revendication 4, contenant au moins un autre composant résineux thermoplastique choisi parmi les polycarbonates aromatiques, les polyester-carbonates aromatiques, les polyesters, les polyamides.

**6.** Procédé pour la préparation de caoutchoucs greffés ayant la structure décrite dans les revendications 1 et 2, par polymérisation greffée de monomères formant des résines en présence d'au moins un caoutchouc à l'état d'émulsion, ayant un indice de gonflement ≥ 30 (dans le toluène), selon lequel, durant 25 à 90 % de la durée de réaction totale, le mélange de réaction contient 5 à 70 % en poids (par rapport au monomère total introduit au moment considéré) de monomère non converti.

**7.** Procédé de préparation de caoutchoucs greffés ayant la structure décrite dans les revendications 1 et 2, par polymérisation greffée de monomères formant des résines en présence d'au moins un caoutchouc à l'état d'émulsion, ayant un indice de gonflement ≥ 40 (dans le toluène), selon lequel, durant 30 à 80 % de la durée de réaction totale, il y a dans le mélange de réaction une quantité de 7,5 à 60 % en poids (par rapport au monomère total introduit au moment considéré) de monomère non converti.

**8.** Procédé de préparation de caoutchoucs greffés selon les revendications 6 et 7, caractérisé en ce que l'on utilise du polybutadiène en tant que caoutchouc en émulsion et des mélanges de styrène et d'acrylonitrile en tant que monomères.

**9.** Utilisation des matières à mouler thermoplastiques selon les revendications 1 à 5 pour la fabrication de pièces moulées.

Fig. 1

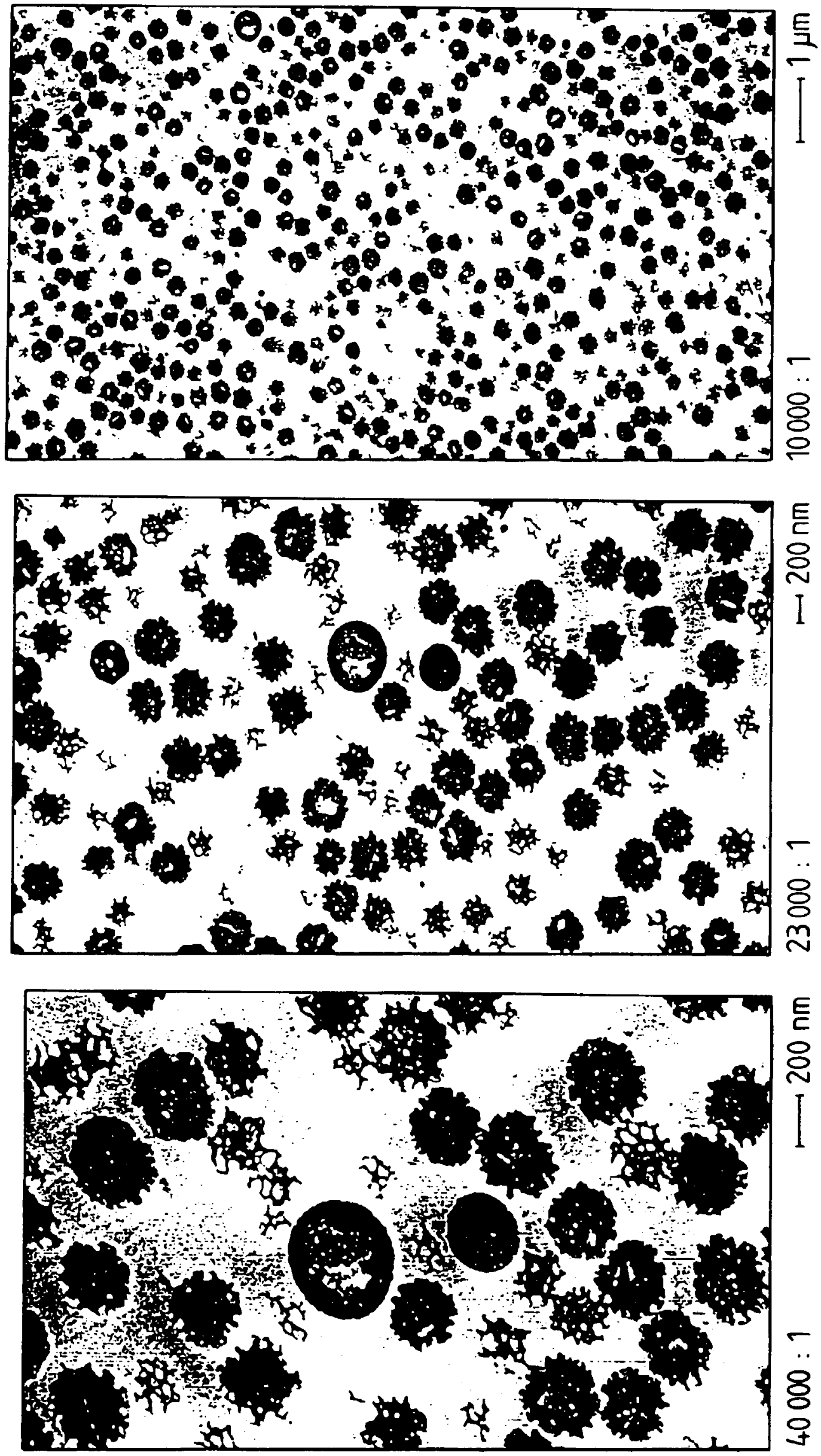

Fig. 2

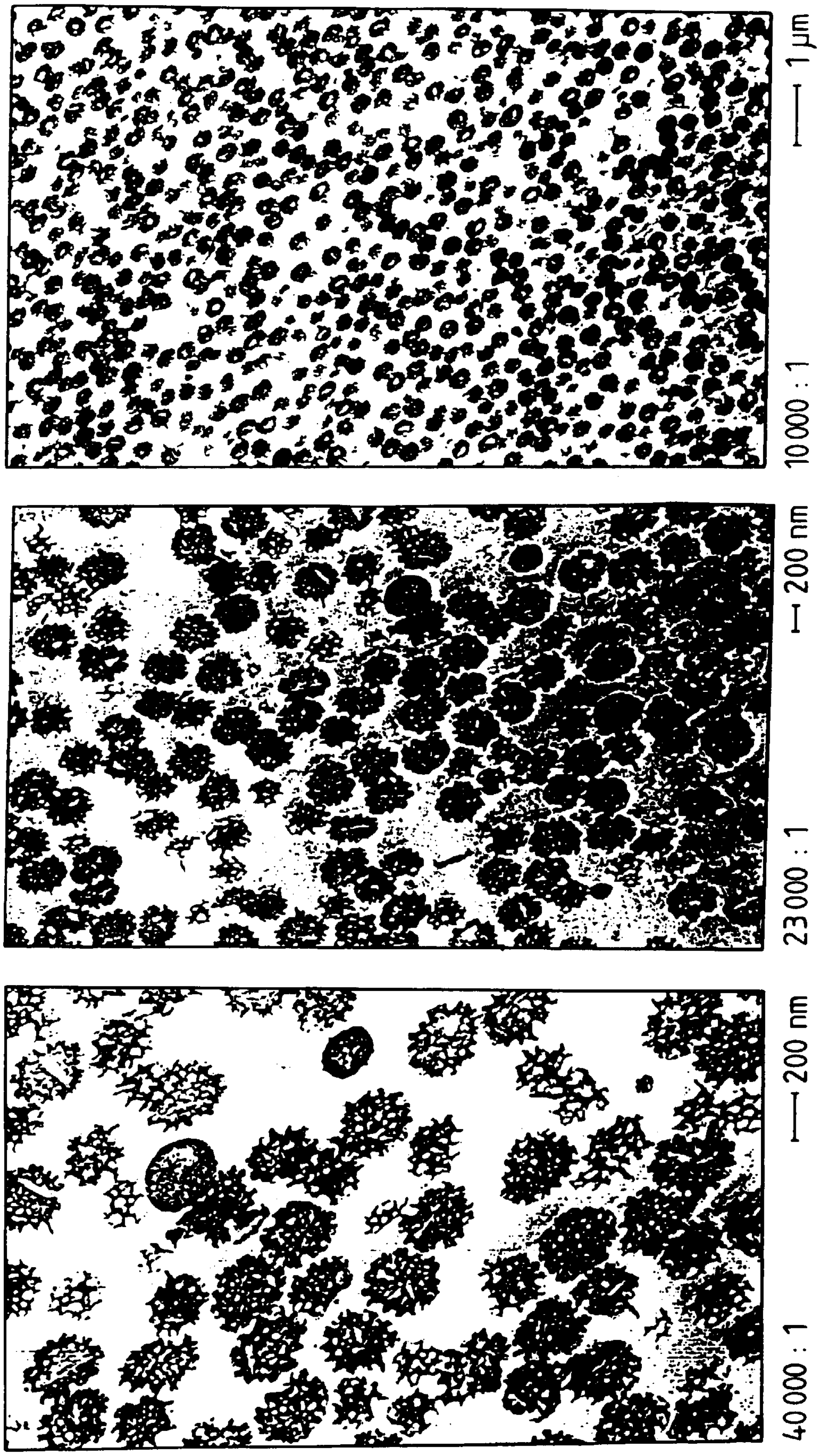

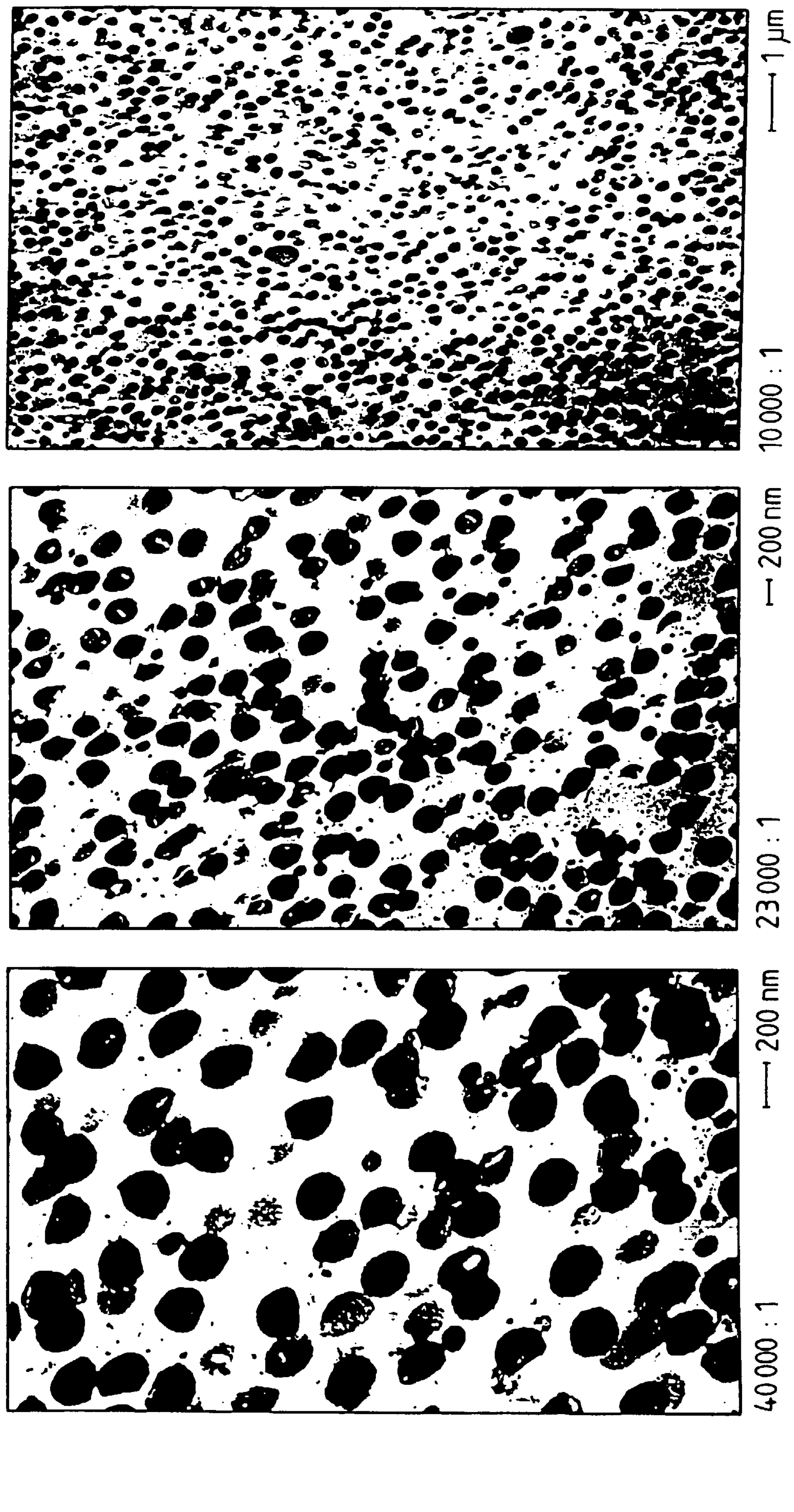


Fig. 3

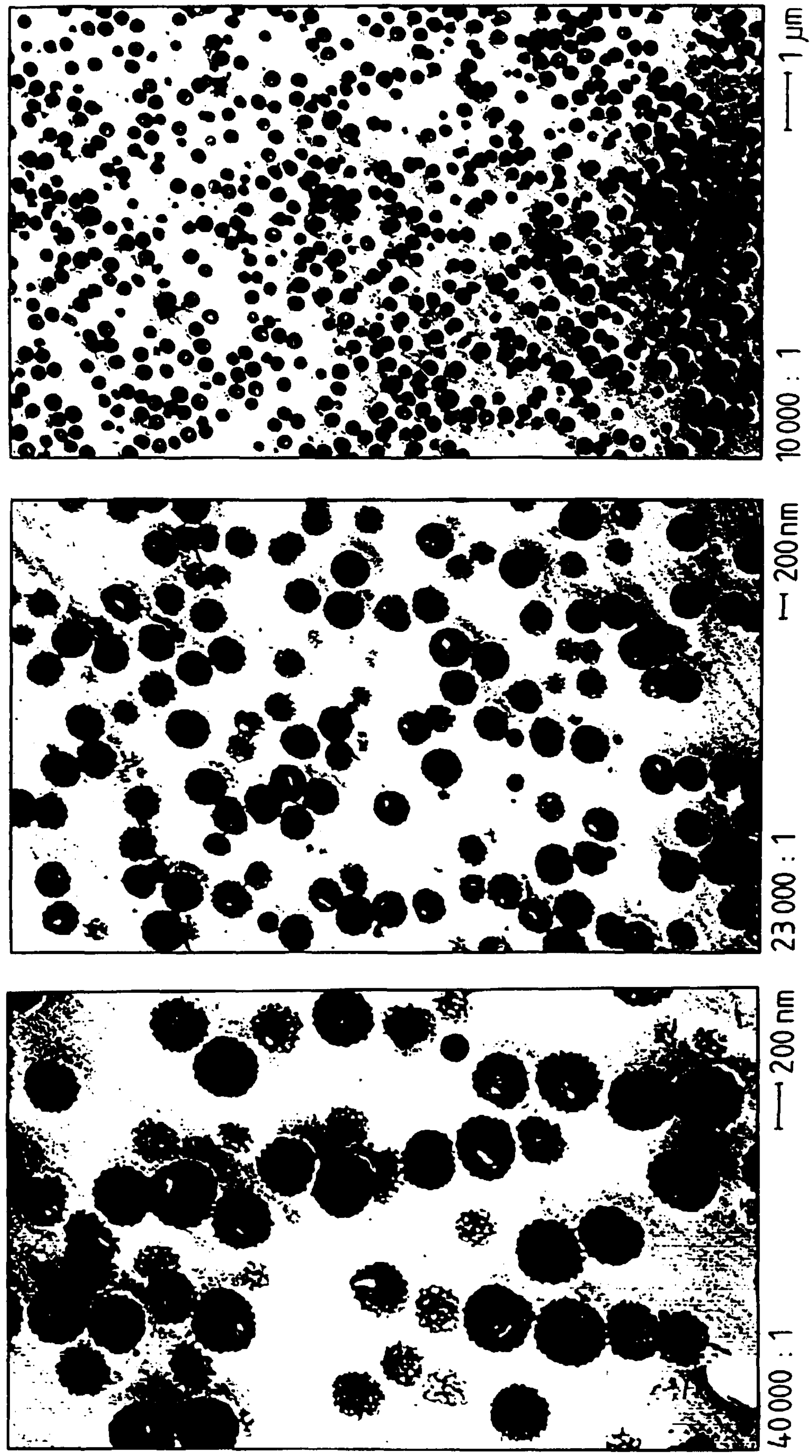


Fig. 4

Fig. 5

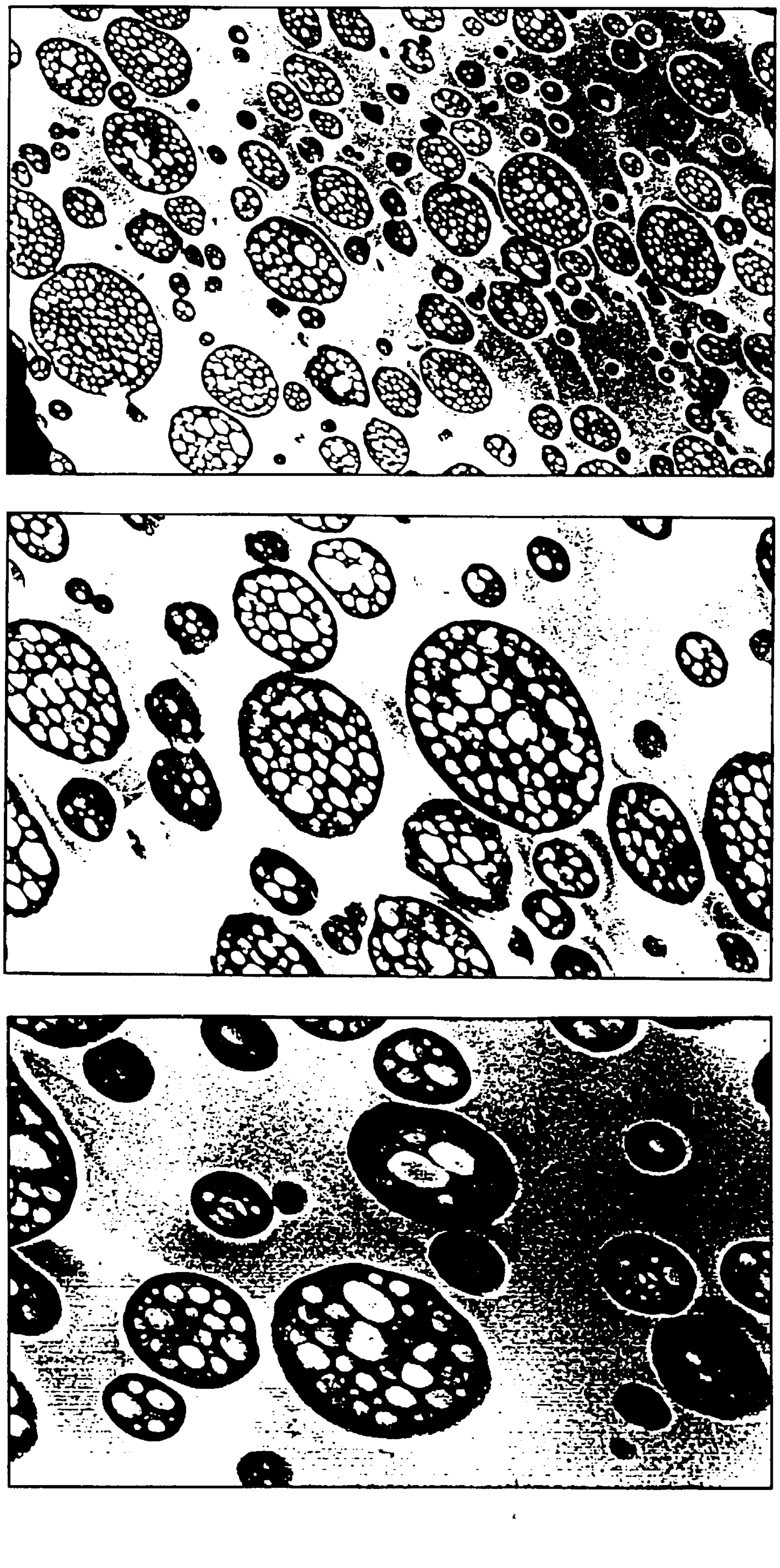

10 000 : 1 — 1 µm

23 000 : 1 — 200 nm

40 000 : 1 — 200 nm